# EUROPÄISCHE PATENTSCHRIFT

(11) **EP 0 552 483 B1**
(45) Veröffentlichungstag und Bekanntmachung des Hinweises auf die Patenterteilung: **24.07.1996**
(21) Anmeldenummer: 92121766.7
(22) Anmeldetag: 22.12.1992
(51) Int. Cl.: B65G 51/04

(54) **Rohrpostanlage**
Pneumatic post installation
Installation de transport tubulaire

(30) Priorität: 22.01.1992 DE 4201664
(43) Veröffentlichungstag der Anmeldung: 28.07.1993
(73) Patentinhaber: TECHNO MARK AG, CH-6343 Rotkreuz (CH)
(72) Erfinder: Lang, Hartmut, D-7310 Plochingen (DE)
(74) Vertreter: Gahlert, Stefan, Dr.-Ing.

(56) Entgegenhaltungen:
- DE-A- 1 506 442
- DE-C- 304 437

## Beschreibung

Die Erfindung betrifft eine Rohrpostanlage mit mindestens einem Gebläse, über dessen Saug- und Druckseite ein Fahrrohr einer Zuführstrecke und ein Fahrrohr einer Rückführstrecke betrieben sind, wobei zwischen der Zuführstrecke und der Rückführstrecke eine Mehrzahl von Gebläsen angeordnet ist und wobei jedes Gebläse einen Teilabschnitt des Fahrrohres der Zuführstrecke und des Fahrrohres der Rückführstrecke antreibt.

Eine derartige Rohrpostanlage ist aus der DE-C-304 437 bekannt.

Die bekannte Anlage ist in aneinanderstoßende Förderkreise unterteilt, wobei an denjenigen Stellen, in denen die Förderkreise zusammenstoßen, neben parallel zum Fahrrohr liegenden Luftverdichtern selbständig wirkende Doppelschleusen eingebaut sind, die neben dem Ausschleusen sowohl ein Weiterbefördern im gleichen Förderkreis als auch in einen anderen Förderkreis hinüber bewerkstelligen.

Dadurch wird es ermöglicht, daß eine Sendung, die für einen in der Förderrichtung vor der Aufgabestelle gelegenen Empfänger bestimmt ist, nicht die ganze Rohrpostanlage durchlaufen muß, sondern nur einen Teilbereich, um zu ihrem Bestimmungsort zu gelangen. Jedoch ist eine derartige Anlage nicht für Rohrpostbüchsen mit einem hohen Gewicht von bis zu etwa 20 kg ausgelegt.

Der vorliegenden Erfindung liegt die Aufgabe zugrunde, eine Rohrpostanlage zu schaffen, die auch bei langen Fahrstrecken mit schweren Rohrpostbüchsen eine hohe Belegungsfrequenz bzw. eine hohe Fahrgeschwindigkeit ermöglicht und die gleichzeitig eine möglichst einfache Bauweise gestattet.

Diese Aufgabe wird bei einer Rohrpostanlage gemäß der eingangs genannten Art dadurch gelöst, daß am Anfang und am Ende eines jeden Teilabschnittes jeweils ein Schieber zur Absperrung des Fahrrohres, daß auf der Saugseite eines jeden Gebläses in Fahrtrichtung gesehen hinter jedem Schieber ein Lufteinlaß und daß auf der Druckseite eines jeden Gebläses in Fahrtrichtung gesehen vor jedem Schieber ein Luftauslaß vorgesehen sind.

Dadurch lassen sich bei schweren Rohrpostbüchsen mit Zuladungen bis zu etwa 20 kg Fahrgeschwindigkeiten von 5 m/s und mehr über beliebig lange Strecken erzielen. Gleichzeitig wird eine hohe Belegungsfrequenz ermöglicht und ein besonders einfacher Anschluß der Gebläse an die Teilabschnitte der Fahrstrecke gewährleistet.

In weiter bevorzugter Ausgestaltung der Erfindung sind die Gebläse mit ihrer Saugseite jeweils in Fahrtrichtung gesehen vor dem Schieber am Ende eines Teilabschnittes und mit ihrer Druckseite jeweils in Fahrtrichtung gesehen hinter dem Schieber am Anfang eines Teilabschnittes an die Fahrrohre angeschlossen.

Durch diese Maßnahme ist sichergestellt, daß die volle Saugleistung bzw. Druckleistung der Gebläse jeweils über die gesamte Länge des betreffenden Teilabschnittes zur Verfügung steht.

Bei einer weiteren Ausgestaltung der Erfindung weist jeder Schieber zur Unterbrechung eines Fahrrohres jeweils eine automatische Steuerung auf, über die der Schieher bei Annäherung einer Rohrpostbüchse aus einer Schließstellung in eine Durchlaßstellung bewegt wird und nach Durchlaß der Büchse wieder in die Schließstellung bewegt wird.

Diese Maßnahme hat den Vorteil, daß die Rohrpostbüchsen am Übergang zwischen den einzelnen Teilstrecken nicht abgebremst werden müssen, sondern mit voller Geschwindigkeit weiterfahren können. Obwohl die Steuerung grundsätzlich mechanisch aufgebaut sein kann, ist eine Sensorsteuerung bevorzugt.

Es hat sich allerdings gezeigt, daß bei einem Verzicht auf die Abbremsung der Rohrpostbüchsen an den Schiebern zwischen den Teilabschnitten eine Einzelkontrolle der Rohrpostbüchsen erschwert wird.

In weiter bevorzugter Ausbildung der Erfindung wird daher jede Rohrpostbüchse am Ende einer jeden Teilstrecke am Schieber, der sich in Schließstellung befindet, abgebremst. Erst danach wird der Schieber in Durchlaßstellung gedreht, so daß die Rohrpostbüchse in den nachfolgenden Teilabschnitt gelangt. Der Schieber wird nun wieder in die Schließstellung bewegt und die Rohrpostbüchse beschleunigt.

Die Schieber sind vorzugsweise als Drehschieber ausgebildet, wodurch ein einfacher, störungsfreier Betrieb gewährleistet ist.

Bei einer weiteren Ausgestaltung der Erfindung sind die Gebläse mit ihrer Druckseite jeweils an die Zuführstrecke zum Transport voller Rohrpostbüchsen und mit ihrer Saugseite jeweils an die Rückführstrecke zur Rückführung leerer Rohrpostbüchsen angeschlossen.

Dies hat den Vorteil, daß die höhere Gebläseleistung auf der Druckseite zur Verfügung steht, um voll beladene, schwere Rohrpostbüchsen mit hoher Geschwindigkeit zu bewegen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

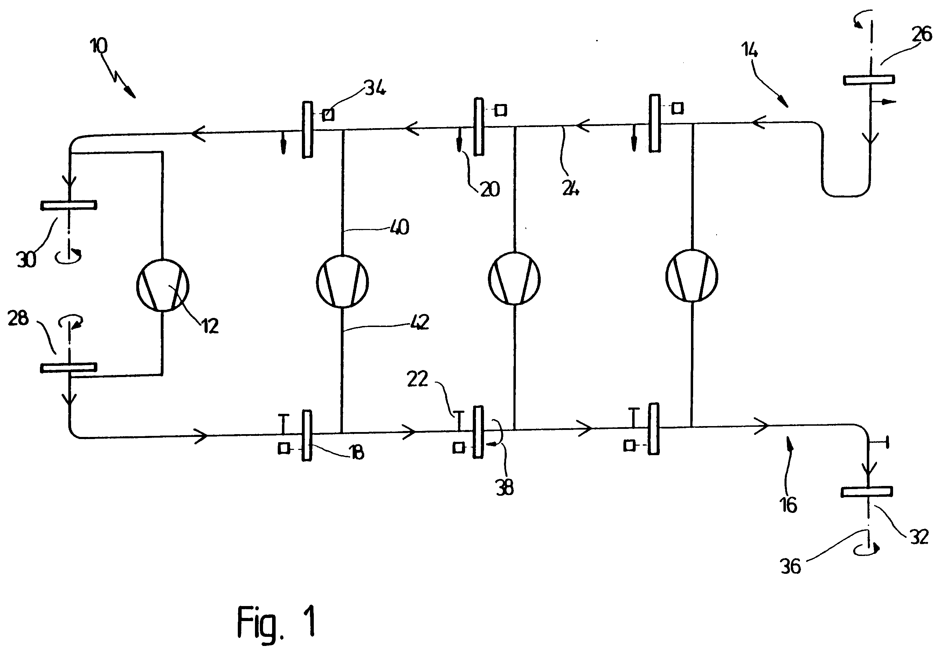

Ein Ausführungsbeispiel der Erfindung ist in der Zeichnung dargestellt und wird in der nachfolgenden Beschreibung näher erläutert. Die einzige Figur zeigt:
eine erfindungsgemäße Rohrpostanlage in schematischer Darstellung.

Eine insgesamt mit 10 bezeichnete Rohrpostanlage weist als Bestandteil einer Zuführstrecke für volle Rohrpostbüchsen ein Fahrrohr 16 auf. Zur Rückführung leerer Rohrpostbüchsen ist ein weiteres Fahrrohr 14 vorgesehen.

Die beiden Fahrrohre 14, 16 sind in einzelne Teilabschnitte 24 unterteilt, die jeweils über ein Gebläse 12 betrieben werden. Die Gebläse 12 sind dabei mit ihrer Druckseite 42 jeweils an einen Teilabschnitt 24 des Fahrrohres 16 der Zuführstrecke angeschlossen und mit ihrer Saugseite 40 jeweils an einen Teilabschnitt 24 des Fahrrohres 14 der Rückführstrecke angeschlossen.

Die einzelnen Teilabschnitte 24 der beiden Fahrrohre 14, 16 sind an ihrem Anfang und Ende jeweils durch einen Schieber 18 abgeschlossen, der in einer nachfolgend erläuterten Weise zwischen einer Schließstellung und einer Durchlaßstellung automatisch verstellbar ist.

Die Gebläse 12 sind mit ihrer Saugseite 40 jeweils in Fahrtrichtung gesehen vor dem Schieber 18 am Ende eines Teilabschnittes 24 und mit ihrer Druckseite 42 jeweils in Fahrtrichtung gesehen hinter dem Schieber 18 am Anfang eines Teilabschnittes 24 an die Fahrrohre 14, 16 angeschlossen. In jedem Teilabschnitt 24 ist auf der Saugseite 40 eines jeden Gebläses 12 in Fahrtrichtung gesehen hinter jedem Schieber 18 ein Lufteinlaß 20 vorgesehen, während in jedem Teilabschnitt auf der Druckseite 42 eines jeden Gebläses 12 in Fahrtrichtung gesehen vor jedem Schieber 18 ein Luftauslaß 22 vorgesehen ist.

Befinden sich die Schieber 18 in Schließstellung, so steht bei dieser Anordnung die volle Saugleistung eines jeden Gebläses 12 über den gesamten Teilabschnitt 24 auf der Saugseite 40 und die volle Druckleistung des Gebläses 12 über den gesamten Teilabschnitt 24 auf der Druckseite 42 zur Verfügung. Da die Gebläse 12 druckseitig zum Betrieb des Fahrrohres 16 der Zuführstrecke für volle Rohrpostbüchsen verwendet werden, steht jeweils der volle Gebläsedruck direkt am Anfang eines jeden Teilabschnittes 24 zur Verfügung, was sich vorteilhaft auf die Beschleunigung einer schweren Rohrpostbüchse auswirkt. Infolge des Druckabfalls über die Länge eines Teilabschnittes bewegt sich eine Rohrpostbüchse nämlich zu Beginn eines Teilabschnittes mit einer höheren Geschwindigkeit und wird jeweils zum Ende des Teilabschnittes hin in Fahrtrichtung gesehen langsamer. Nach Durchfahren des vorherigen Teilabschnittes 24 muß eine schwere Rohrpostbüchse also zunächst wieder entsprechend beschleunigt werden, wozu sich die erfindungsgemäß gewählte Anordnung besonders eignet.

Dagegen ist auch ein auf der Saugseite 40 der Gebläse 12 geringerer zur Verfügung stehender Unterdruck ausreichend, um leere Rohrpostbüchsen mit hoher Belegungsfrequenz und hoher Geschwindigkeit zu transportieren.

Die in die Fahrrohre 16, 14 der Zuführ- und Rückführstrecke eingeschalteten Schieber 18 sind als Drehschieber ausgebildet, die mit Hilfe einer automatischen Steuerung 34 zwischen einer Schließstellung und einer Durchlaßstellung verdrehbar sind.

An sich wäre es möglich, bei Annäherung einer Rohrpostbüchse auf einen vorbestimmten Abstand jeden Schieber 18 aus der Schließstellung, in der das Fahrrohr verschlossen ist, wie durch den Pfeil 38 angedeutet, in eine Durchlaßstellung zu verdrehen, in der die Rohrpostbüchse den Schieber 18 ohne Abbremsung passieren kann. Nach Durchlaß der Rohrpostbüchse könnte der Schieber 18 über die automatische Steuerung 34 dann wieder in seine Schließstellung verdreht werden. Es hat sich jedoch als vorteilhafter erwiesen, die Rohrpostbüchsen zunächst an einem jeweiligen Schieber 18 pneumatisch abzubremsen und erst danach den Schieber 18 in die Durchlaßstellung zu bewegen, so daß die Rohrpostbüchse in den nachfolgenden Fahrrohrabschnitt gelangt und dort wieder beschleunigt wird, wozu der Schieber 18 wieder in seine Schließstellung bewegt wird. Auf diese Weise ist eine bessere Einzelkontrolle der Rohrpostbüchsen möglich.

Zur Aufgabe von Rohrpostbüchsen ist am Beginn eines jeden Fahrrohres 14, 16 jeweils eine Sendestation 26 bzw. 28 an sich bekannter Bauart vorgesehen. Auch hierbei sind die Schieber 18 als Drehschieber ausgebildet, die um ihre Längsachse 36 verdrehbar sind.

Am Ende jedes Fahrrohres 14, 16 ist jeweils eine Empfangsstation 30 bzw. 32 entsprechender Bauart mit pneumatischer Abfederung vorgesehen.

Obwohl die Schieber 18 in den Fahrrohren 16, 14 der Zuführ- bzw. Rückführstrecke normalerweise nur zur Verbindung der einzelnen Teilabschnitte 24 vorgesehen sind, können bei sehr langen Rohrpostanlagen auch Sende- oder Empfangsstationen in die Fahrrohre 14, 16 eingeschaltet sein, die in geeigneter Weise mit den Schiebern 18 und deren automatischer Steuerung 34 kombiniert sind.

## Patentansprüche

1. Rohrpostanlage mit mindestens einem Gebläse (12), über dessen Druckseite (42) und Saugseite (40) ein Fahrrohr (16) einer Zuführstrecke und ein Fahrrohr (14) einer Rückführstrecke betrieben sind, wobei zwischen der Zuführstrecke und der Rückführstrecke eine Mehrzahl von Gebläsen (12) angeordnet ist, und wobei jedes Gebläse (12) einen Teilabschnitt (24) des Fahrrohres (16) der Zuführstrecke und des Fahrrohres (14) der Rückführstrecke antreibt, dadurch gekennzeichnet, daß am Anfang und am Ende eines jeden Teilabschnittes (24) jeweils ein Schieber (18) zur Absperrung des Fahrrohres (14, 16), daß auf der Saugseite (40) eines jeden Gebläses in Fahrtrichtung gesehen hinter jedem Schieber (18) ein Lufteinlaß (20) und daß auf der Druckseite (42) eines jeden Gebläses (12) in Fahrtrichtung gesehen vor jedem Schieber (18) ein Luftauslaß (22) vorgesehen sind.

2. Rohrpostanlage nach Anspruch 1, dadurch gekennzeichnet, daß die Gebläse (12) mit ihrer Saugseite (40) jeweils in Fahrtrichtung gesehen vor dem Schieber (18) am Ende eines Teilabschnittes (24) und mit ihrer Druckseite (42) jeweils in Fahrtrichtung gesehen hinter dem Schieber (18) am Anfang eines Teilabschnittes (24) an die Fahrrohre (14, 16) angeschlossen sind.

3. Rohrpostanlage nach Anspruch 1 oder 2, dadurch gekennzeichnet, daß jeder Schieber (18) zur Unterbrechung eines Fahrrohres (14, 16) jeweils eine automatische Steuerung (34) aufweist, über die der Schieber (18) bei Annäherung einer Rohrpostbüchse aus einer Schließstellung in eine Durchlaßstellung bewegt wird und nach Durchlaß der Büchse wieder in die Schließstellung bewegt wird.

4. Rohrpostanlage nach Anspruch 1 oder 2, dadurch gekennzeichnet, daß die Schieber (18) zur Unterbrechung der Fahrrohre (14, 16) bei Annäherung von Rohrpostbüchsen zur pneumatischen Abbremsung geschlossen bleiben, anschließend geöffnet werden und nach Durchlaß der Rohrpostbüchsen in den jeweils nachfolgenden Teilabschnitt automatisch geschlossen werden.

5. Rohrpostanlage nach einem der vorhergehenden Ansprüche, dadurch gekennzeichnet, daß die Schieber (18) als Drehschieber ausgebildet sind.

6. Rohrpostanlage nach einem der vorhergehenden Ansprüche, dadurch gekennzeichnet, daß die Gebläse (12) mit ihrer Druckseite (42) jeweils an die Zuführstrecke zum Transport voller Rohrpostbüchsen angeschlossen sind und mit ihrer Saugseite (40) jeweils an die Rückführstrecke zur Rückführung leerer Rohrpostbüchsen angeschlossen sind.

## Claims

1. Pneumatic-tube dispatch installation with at least one blower (12), via the pressure side (42) and suction side (40) of which a travel tube (16) in a supply stretch and a travel tube (14) in a return stretch are operated, a plurality of blowers (12) being disposed between the supply stretch and the return stretch and each blower (12) driving a partial section (24) of the travel tube (16) in the supply stretch and of the travel tube (14) in the return stretch, characterized in that a slide valve (18) for shutting off the travel tube (14, 16) is provided, in each case, at the beginning and at the end of each partial section (24), that an air inlet (20) is provided on the suction side (40) of each blower, downstream, viewed in the direction of travel, of each slide valve (18), and that an air outlet (22) is provided on the pressure side (42) of each blower (12), upstream, viewed in the direction of travel, of each slide valve (18).

2. Pneumatic-tube dispatch installation according to claim 1, characterized in that the blowers (12) are connected to the travel tubes (14, 16) by their suction side (40), upstream in each case, viewed in the direction of travel, of the slide valve (18) at the end of a partial section (24), and by their pressure side (42), downstream in each case, viewed in the direction of travel, of the slide valve (18) at the beginning of a partial section (24).

3. Pneumatic-tube dispatch installation according to claim 1 or 2, characterized in that each slide valve (18) for interrupting a travel tube (14, 16) has, in each case, an automatic control system (34) via which the slide valve (18) is moved out of a closing position and into a letting-through position when a pneumatic-tube dispatch carrier approaches, and is moved into the closing position again after letting the carrier through.

4. Pneumatic-tube dispatch installation according to claim 1 or 2, characterized in that the slide valves (18) for interrupting the travel tubes (14, 16) remain closed in order to bring about automatic braking when pneumatic-tube dispatch carriers approach, are then opened and are automatically closed after letting through the pneumatic-tube carriers into the partial section that follows in each case.

5. Pneumatic-tube dispatch installation according to one of the preceding claims, characterized in that the slide valves (18) are constructed as rotary slide valves.

6. Pneumatic-tube dispatch installation according to one of the preceding claims, characterized in that the blowers (12) are connected, by their pressure side (42) in each case, to the supply stretch for transporting full pneumatic-tube dispatch carriers, and are connected, by their suction side (40) in each case, to the return stretch for returning empty pneumatic-tube dispatch carriers.

## Revendications

1. Installation de poste pneumatique comportant au moins une soufflante (12), par le côté refoulement (42) et le côté aspiration (40) de laquelle fonctionnent un tube de circulation (16) d'un parcours d'aller et un tube de circulation (14) d'un parcours de retour, dans laquelle entre le parcours d'aller et le parcours de retour sont prévues plusieurs soufflantes (12), et dans laquelle chaque soufflante (12) entraîne une section (24) du tube de circulation (16) du parcours d'aller et du tube de circulation (14) du parcours de retour, caractérisée en ce qu'au début et à la fin de chaque section (24) est prévu un obturateur (18) pour la fermeture du tube de circulation (14, 16), en ce que sur le côté aspiration (40) de chaque soufflante, une entrée d'air (20) est prévue derrière chaque obturateur (18), dans le sens de circulation et en ce que sur le côté refoulement (42) de chaque soufflante (12), une sortie d'air (22) est prévue devant chaque obturateur (18), vu dans le sens de circulation.

2. Installation de poste pneumatique selon la revendication 1, caractérisée en ce que les soufflantes (12) sont raccordées aux tubes de circulation (14, 16), du côté aspiration (40), devant l'obturateur (18), vu dans le sens de circulation, à la fin d'une section (24), et du côté refoulement (42), derrière l'obturateur (18), vu dans le sens de circulation, au début d'une section (24).

3. Installation de poste pneumatique selon la revendication 1 ou 2, caractérisée en ce que chaque obturateur (18) comporte, pour l'interruption d'un tube de circulation (14, 16), une commande automatique (34), par laquelle l'obturateur (18) est déplacé, à l'approche d'une boîte postale pneumatique, d'une position de fermeture dans une position de passage, et après passage de la boîte, est à nouveau déplacé dans la position de fermeture.

4. Installation de poste pneumatique selon la revendication 1 ou 2, caractérisée en ce que les obturateurs (18) pour l'interruption des tubes de circulation (14, 16), restent fermés à l'approche des boîtes postales pneumatiques, en vue du freinage pneumatique, puis sont ouverts et après passage des boîtes postales pneumatiques, sont automatiquement fermés dans la section suivante.

5. Installation de poste pneumatique selon l'une des revendications précédentes, caractérisée en ce que les obturateurs (18) sont conformés en obturateurs tournants.

6. Installation de poste pneumatique selon l'une des revendications précédentes, caractérisée en ce que les soufflantes (12) sont raccordées du côté refoulement (42) au parcours d'aller en vue du transport de boîtes postales tubulaires pleines et sont raccordés du côté aspiration (40), au parcours de retour, pour le retour des boîtes postales pneumatiques vides.
